# EUROPEAN PATENT APPLICATION

(11) **EP 3 050 797 A1**
(43) Date of publication of application: **03.08.2016**
(21) Application number: 16153404.5
(22) Date of filing: 29.01.2016
(51) Int. Cl.: B64C 21/00, B64C 23/00, B64D 15/12

(54) **BOUNDARY LAYER CONTROL ASSEMBLY FOR AN AIRCRAFT AIRFOIL AND METHOD OF CONTROLLING A BOUNDARY LAYER**

(30) Priority: 30.01.2015 US 201514610547
(71) Applicant: Hamilton Sundstrand Corporation, Windsor Locks, CT 06096-1010 (US)
(72) Inventor: LIN, Ray-Sing, Glastonbury, CT Connecticut 06033 (US); TILLMAN, Thomas G., West Hartford, CT Connecticut 06119 (US); HENZE, Chad M., Granby, CT Connecticut 06035 (US)
(74) Representative: Iceton, Greg James

(57) **Abstract**

A boundary layer control assembly for an aircraft airfoil includes a leading edge (16) and a trailing edge (18) spaced from the leading edge (16) to form a chord length (20). The boundary layer control assembly also includes a heating element (28) disposed proximate the leading edge (16) to heat a boundary layer formed along the surface of the aircraft airfoil.

## Description

### BACKGROUND OF THE INVENTION

The embodiments herein relate to aircraft, helicopter rotor, and aircraft propeller airfoils and, more particularly, to a boundary layer control assembly for such airfoils, as well as a method of controlling a boundary layer.

It is desirable to control the boundary layer along aircraft airfoil surfaces for a number of reasons. For example, by maintaining a laminar flow along the airfoil surface benefits associated with reduced aerodynamic drag and, in the case of propeller or propulsion systems, higher propulsive efficiency are achieved. These efforts may be referred to as laminar flow control techniques. All efforts are traditionally heavy, large, costly, and difficult for maintenance purposes. One such technique involves boundary layer suction, for example, which requires pumps among other components. This technique, along with other prior efforts require added weight, high installation cost, and routine maintenance, which are all undesirable from a manufacturer's and operator's standpoint. Efforts to implement the aforementioned laminar flow control assemblies into rotating wings, such as propeller blades or rotor blades, are subject to additional and more severe difficulties due to the rotatable nature of the airfoils.

### BRIEF DESCRIPTION OF THE INVENTION

According to one embodiment, a boundary layer control assembly for an aircraft airfoil includes a leading edge and a trailing edge spaced from the leading edge to form a chord length. The boundary layer control assembly also includes a heating element disposed proximate the leading edge to heat a boundary layer formed along the surface of the aircraft airfoil, wherein the boundary layer cools downstream of the heating element.

According to another embodiment, a method of controlling a boundary layer of a propeller blade is provided. The method includes heating a leading edge of the propeller blade with a heating element. The method also includes effectively cooling a boundary layer fluid located downstream of the heating element to delay formation of a transition from laminar flow to turbulent flow of the boundary layer.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent by way of example only from the following detailed description taken in conjunction with the accompanying drawings in which:
FIG. 1 illustrates an aircraft propeller airfoil; and
FIG. 2 is a plot illustrating the effect of temperature on the flow characteristics of a boundary layer along a surface of the aircraft airfoil.

### DETAILED DESCRIPTION OF THE INVENTION

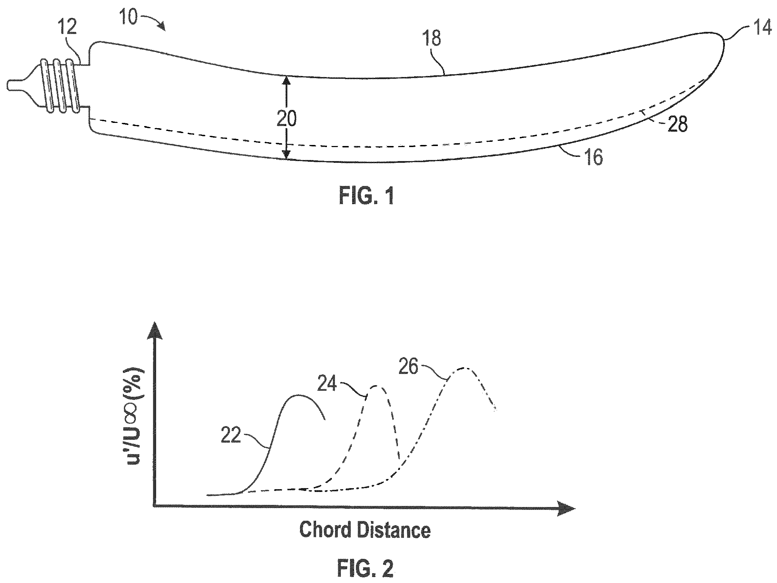

Referring to FIG. 1, a rotating airfoil is generally illustrated and relates to any airfoil used to facilitate flight for a vehicle. In the illustrated embodiment, the aircraft airfoil is depicted as a propeller blade 10. However, it is to be appreciated that the embodiments described herein may be beneficial for a rotary wing vehicle such as a helicopter or a fixed wing vehicle such as a traditional airplane, as well.

The propeller blade 10 extends from a root portion 12 to a tip portion 14 to define a span length of the propeller blade 10. In a substantially transverse direction, the propeller blade 10 extends from a leading edge 16 to a trailing edge 18 to define a chord length 20. The particular dimensions of the propeller blade will vary depending upon the particular application of use.

During operation of the propeller blade 10, a fluid (e.g., air) passes over the propeller blade 10 in a direction going from the leading edge 16 to the trailing edge 18 and forms a boundary layer along the surface(s) of the propeller blade 10 that extend from the leading edge 16 to the trailing edge 18.. It is desirable to maintain laminar flow in the boundary layer for as long as possible along the chord length 20 of the propeller blade 10. In other words, it is desirable to delay transition from laminar flow to turbulent flow for as long as possible. Advantages associated with delaying such a transition include reduced drag losses and in the case of a propulsion system (propeller or rotor) greater propulsive efficiency. Additionally, surface irregularities may cause transition from laminar to turbulent flow. The embodiments described herein lead to greater resistance to surface irregularities largely due to a thicker boundary layer, thereby providing a lower Reynolds number.

To delay the transition from laminar to turbulent flow along the boundary layer, localized leading-edge heating is applied to the propeller blade 10. As shown in FIG. 2, localized heating applied to the propeller blade 10 delays the transition from laminar to turbulent flow, with respect to the chord length 20 of the propeller blade 10. Three cases are plotted to illustrate a measure of unsteadiness inside the boundary layer that is indicative of laminar vs. turbulent flow as a function of distance along the chord length 20. The measure of unsteadiness on the vertical axis is represented by u'/U_{∞}, with u' representing a peak oscillation amplitude inside the boundary layer and U_{∞} representing a free-stream velocity. In a fixed wing aircraft, the vehicle flight speed corresponds to the free-stream velocity. For a helicopter rotor or propeller, the rotating velocity must be taken into account. Reference numeral 22 represents a case with no heating applied; reference numeral 24 represents heating applied at a first temperature; and reference numeral 26 represents heating applied at a second temperature that is greater than the first temperature. It is clear that localized leading-edge heating of the propeller blade10 has a direct impact on the location at which the boundary layer flow transitions from laminar to turbulent. This is based on an increase in the boundary layer fluid temperature at an upstream location, with the temperature becoming greater than the unheated wall surface temperature of the propeller blade 10, and subsequent cooling of the downstream flow. Heat from the boundary layer is transferred to the propeller blade 10, which leads to a stabilizing effect on the boundary layer and damping of unsteady disturbances.

A heating element 28 is introduced to provide localized heating along a leading portion of the propeller blade 10. In particular, the heating element 28 is disposed proximate the leading edge 16 to heat the boundary layer formed along the surface of the propeller blade 10. Although a single heating element 28 is illustrated and described herein, it is to be appreciated that a plurality of heating elements may be included in a variety of arrangements. For example, the heating elements may be spaced from each other in the span length direction, the chord length direction, or a combination thereof.

Irrespective of the precise number of heating elements and their relative positioning, the heating element 28 is positioned at a location that is closer to the leading edge 16 than to the trailing edge 18. In one embodiment, the heating element is located at a chord length position that corresponds to a pressure minimum of the boundary layer fluid. For a propeller blade, this is near the leading edge 16. In one embodiment, the heating element is located immediately adjacent the leading edge 16. In another embodiment, the heating element is located within 30% of the chord length 20 relative to the leading edge 16. The precise location of the heating element 28 will be determined by the specifics of the propeller blade 10 and its application of use. The geometry of the propeller blade 10 will be one such factor in determining the most advantageous location of the heating element 28.

The heating element 28 may be any component or assembly that is positioned on or within the propeller blade 10 in a manner that does not disrupt overall performance of the propeller blade 10. In one embodiment, the heating element 28 is an electro-resistant strip that extends along all or a portion of the span length of the propeller blade proximate the leading edge 16. The strip may be easily applied to an exterior or interior location of the propeller blade 10. The heating element 28 may be deposited via 3D printing.

In yet another embodiment, the heating element 28 is one or more de-icing mechanisms of the propeller blade 10, such as de-icing heaters. De-icing heaters are typically intermittently employed along the leading edge of the root of the propeller blade 10 for de-icing purposes. In the embodiments of the invention described herein, such de-icing heaters, or a portion thereof, may be employed in a continuous manner during flight to provide the advantages associated with boundary layer control that are described in detail herein. In addition to the continuous use of the de-icing heaters, the particular portion of the heaters that are used is strategically determined based on the desired localized heating position. In such an embodiment, modification of existing de-icing heaters on propeller blades provides a low-cost modification to achieve the boundary layer control benefits described herein.

It is to be understood that numerous other suitable embodiments of the heating element 28 are contemplated. Regardless of the specific type of heating element employed, a lightweight and compact heating element that provides localized heating of the propeller blade provides reduced drag, higher propulsive efficiency, greater resistance to surface irregularities and low cost implementation and maintenance.

While the invention has been described in detail in connection with only a limited number of embodiments, it should be readily understood that the invention is not limited to such disclosed embodiments. Rather, the invention can be modified to incorporate any number of variations, alterations or substitutions not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A boundary layer control assembly for an aircraft airfoil comprising:
a leading edge (16);
a trailing edge (18) spaced from the leading edge (16) to form a chord length (20); and
a heating element (28) disposed proximate the leading edge (16) to heat a boundary layer formed along the surface of the aircraft airfoil, wherein the boundary layer cools downstream of the heating element (28).

2. The boundary layer control assembly of claim 1, wherein the heating element (28) is located immediately adjacent the leading edge (16).

3. The boundary layer control assembly of claim 1, wherein the heating element (28) is located within 30% of the chord length (20) relative to the leading edge (16).

4. The boundary layer control assembly of claim 1, wherein the heating element (28) is located at a pressure minimum location of the chord length.

5. The boundary layer control assembly of any preceding claim, wherein the heating element (28) comprises an electro-resistant strip.

6. The boundary layer control assembly of claim 5, wherein the electro-resistant strip extends along an entire span of the aircraft airfoil from a root portion to a tip portion.

7. The boundary layer control assembly of any preceding claim, further comprising a plurality of heating elements (28) disposed proximate the leading edge.

8. The boundary layer control assembly of any preceding claim, wherein the aircraft airfoil comprises a propeller blade.

9. The boundary layer control assembly of any of claims 1-7, wherein the aircraft airfoil comprises one of a fixed wing and a rotary wing.

10. The boundary layer control assembly of any preceding claim, wherein the heating element (28) comprises a de-icing mechanism of the aircraft airfoil.

11. The boundary layer control assembly of any preceding claim, wherein the heating element (28) is continuously operated to provide continuous heating of the aircraft airfoil during flight.

12. A method of controlling a boundary layer of a propeller blade comprising:
heating a leading edge (16) of the propeller blade with a heating element (28); and
cooling a boundary layer fluid located downstream of the heating element (28) to delay formation of a transition from laminar flow to turbulent flow of the boundary layer.

13. The method of claim 12, wherein heating the boundary layer fluid comprises heating the boundary layer fluid to a temperature greater than an unheated wall temperature of a surface of the propeller blade.

14. The method of claims 12 or 13, wherein heating with the heating element (28) is applied within 30% of the chord length relative to the leading edge.

15. The method of claims 12-14, wherein the heating is applied continuously during flight.
